# EUROPÄISCHE PATENTSCHRIFT

(11) **EP 1 346 556 B1**
(45) Veröffentlichungstag und Bekanntmachung des Hinweises auf die Patenterteilung: **19.10.2011**
(21) Anmeldenummer: 01271732.8
(22) Anmeldetag: 31.10.2001
(51) Int. Cl.: H04M 3/493, H04M 3/527, G10L 15/22

(54) **DIALOGANLAGE FÜR EINE MENSCH-MASCHINE-INTERAKTION MIT KOOPERIERENDEN DIALOGEINRICHTUNGEN**
DIALOG SYSTEM FOR MAN-MACHINE INTERACTION, COMPRISING CO-OPERATING DIALOG DEVICES
EQUIPEMENT INTERACTIF POUR INTERACTION HOMME-MACHINE AVEC DES DISPOSITIFS INTERACTIFS COOPERANTS

(30) Priorität: 18.12.2000 DE 10063148
(43) Veröffentlichungstag der Anmeldung: 24.09.2003
(73) Patentinhaber: Deutsche Telekom AG, 53113 Bonn (DE)
(72) Erfinder: FELDES, Stefan, 64319 Pfungstadt (DE); SCHUHMACHER, Karlheinz, 64560 Riedstadt (DE)
(86) Internationale Anmeldenummer: PCT/EP2001/012612
(87) Internationale Veröffentlichungsnummer: WO 2002/051108

(56) Entgegenhaltungen:
- WO-A-96/18260
- WO-A-98/50907
- US-A- 4 979 206
- US-A- 5 315 705
- US-A- 5 546 452
- US-A- 5 652 785

## Beschreibung

Die vorliegende Erfindung betrifft ein Dialoganlage für eine Mensch-Maschine-Interaktion, über das Nutzer mit verschiedenen Dialogexperten kommunizieren können.

Bekannt sind automatisierte zielgerichtete Sprachdialogsysteme oder mittels natürlicher Sprache bedienbare Informationssysteme, die auf Datenbanken zugreifen können und den Nutzer durch zielführende Fragen auf eine gewünschte Information, Transaktion oder ähnliches hinführen. Der Dialog erfolgt in der Regel durch eine sehr starre Abfolge von System-Fragen und Nutzer-Antworten. Beispiele für solche zielgerichteten Sprachdialogsysteme sind unter anderem Telefonbanking-Systeme oder Kartenreservierungs-Systeme. Ein Vorteil zielgerichteter Dialogsysteme ist in dem zielgerichteten Erfragen der für die konkrete Anwendung notwendigen Nutzerangaben zu sehen.

Aus der DE 196 35 754 A1 ist ein Sprachverarbeitungssystem und Verfahren mit mehreren Spracherkennungsmodulen und Sprachausgabemodulen bekannt. Hierbei wird abhängig von einem Eingabesignal ein Spracherkennungsmodul bzw. Sprachausgabemodul und mit dem jeweils ausgewählten bzw. aktivierten Modul wird die jeweilige Erkennung der Spracherkennung bzw. Sprachausgabe durchgeführt.

Aus der WO 97/43707 ist ein System zur Sprache-zu-Sprache-Konversion bekannnt, welches die Sprache oder den Dialekt der Eingabe erkent, um in derselben Sprache oder demselben Dialekt zu antworten. Ein flexibler Dialog mit unterschiedlichen Dialogeinrichtungen findet hier nicht statt.

Derartige Systeme werden in ihrer derzeitigen Ausprägung allerdings von Nutzern als nicht flexibel genug beurteilt. Denn Nutzeräußerungen, die nicht in der Applikation des jeweiligen Sprachdialogsystems modelliert sind, können nicht interpretiert werden und führen häufig zu nicht auflösbaren Dialogsituationen, in denen das Sprachdialogsystem in einen Zustand eintritt, in dem immer der gleiche Text ausgegeben wird oder die Verbindung getrennt wird.

Neben derartigen zielgerichteten Dialogsystemen gibt es sogenannte Plauder-Dialogsysteme, auch Chat-Bots genannt. Ein Chat-Bot vermittelt dem Nutzer den Eindruck, dass er mit ihm über nahezu beliebige Themen ein Gespräch führen kann. Ein solches "plauderndes" Dialogsystem unterstützt nutzerseitig ein sehr freies Formulieren von Fragen, Antworten und Erläuterungen, so dass ein plaudernder Dialog zwischen Mensch und Maschine entstehen kann. Ein Vorteiler solcher plaudernder Dialogsystem ist darin zu sehen, dass beliebige Nutzereingaben beantwortet werden, ohne dass es zu einer Rückweisung von Eingaben kommt. Allerdings ist ein plauderndes Dialogsystem nicht geeignet, einen zielgerichteten Informationsdialog zu führen, bei dem beispielsweise bestimmte Angaben des Nutzers erfragt werden müssen, bevor die entsprechende Information gefunden und ausgegeben werden kann. Plaudernde Dialogsysteme oder Chat-Bots werden daher von Nutzern häufig als nicht kompetent genug beurteilt, da häufig neutrale und nichtssagende Systemäußerungen als Reaktion auf nicht-modellierte Nutzeräußerungen erzeugt werden.

Der Erfindung liegt daher die Aufgabe zugrunde, ein leistungsfähigeres und flexibleres Dialogsystem Nutzern bereitzustellen.

Ein Kerngedanke der Erfindung ist darin zu sehen, dass ein Nutzer während einer Sitzung nun nicht mehr starr mit einer einzigen Dialoganlage kommuniziert. Statt dessen tritt der Nutzer mit einer speziellen Vermittlungseinrichtung in Verbindung, die ihm in Abhängigkeit von seiner Nutzeräußerung aus einer Vielzahl von Systemäußerungen verschiedener Dialogeinrichtungen die optimale Sytemäußerung liefert. Unter Nutzer- und Systemäußerung sind nachfolgend sowohl Antworten als auch Fragen zu verstehen, die von einer dem Nutzer zugewiesenen Endeinrichtung bzw von Dialogeinrichtungen übermittelt werden. Aufgabe der Vermittlungseinrichtung ist es daher, eine vom Nutzer erzeugte Nutzeräußerung entgegenzunehmen und an mehrere Dialogeinrichtungen weiterzugeben, die Systemäußerungen der Dialogeinrichtungen abzuwarten und gemäß einer bestimmten Logik die geeignetste Systemäußerung an den Nutzer auszugeben.

An dieser Stelle sei darauf hingewiesen, dass es sich bei den Dialogeinrichtungen um an sich bekannte zielgerichtete Dialogeinrichtungen und Chat-Bots handeln kann, die eine Interaktion mit einem Nutzer in Form von Dialogen unterstützen. Solche Dialogeinrichtungen werden nachfolgend auch als Dialogexperten bezeichnet.

Die Erfindung löst das oben genannte technische Problem zum einen mit den Merkmalen des Anspruchs 1.

Danach ist eine Dialoganalge für eine Mensch-Maschine-Interaktion vorgesehen, die wenigstens eine Endeinrichtung aufweist, an der ein Nutzer eine Nutzeräußerung eingeben kann. Die Eingabe der Nutzeräußerung kann beispielsweise per Sprache und einem Mikrofon erfolgen; sie kann aber auch über die Tastatur in die Endeinrichtung eingegeben werden. Um einen hohen Bedienkomfort zu erreichen, ist es möglich, die Nutzeräußerung in natürlicher Sprachform, d.h. in natürlichen Sätzen und Fragen einzugeben. Allerdings ist die Art und Weise, wie eine Nutzeräußerung eingegeben wird, für die vorliegende Erfindung nicht entscheidend. Ferner ist wenigstens eine erste Vermittlungseinrichtung, nachfolgend kurz Vermittler genannt, vorgesehen, die mit der Endeinrichtung verbindbar ist. Der ersten Vermittlungseinrichtung sind mehrere Dialogeinrichtungen zugeordnet, die in an sich bekannter Weise Nutzeräußerungen empfangen, auswerten und verarbeiten können, um anschließend eine geeignete Systemnachricht zu erzeugen. An dieser Stelle sei bereits erwähnt, dass eine Systemnachricht eine für die Endeinrichtung bestimmte Systemäußerung, einen die jeweilige Dialogeinrichtung identifizierenden Identifikationscode und/oder eine Kennung enthält. Die Kennung kann einer harten Entscheidung entsprechen,die beispielsweise der ersten Vermittlungseinrichtung lediglich signalisiert , ob eine Dialogeinrichtung zu einer Nutzeräußerung eine Systemäußerung erzeugen kann oder nicht. Die Kennung kann auch einer weichen Entscheidung entsprechen, d.h. sie gibt an, welche Güte oder Qualität eine erzeugte Systemäußerung besitzt. Das heißt, sie gibt dann den Grad an, mit dem die erzeugte Systemäußerung auf die vorher ausgewertete Nutzeräußerung zutrifft.

Um dem Nutzer einen optimalen Dialog anbieten zu können, weist die erste Vermittlungseinrichtung eine erste Einrichtung zum Weiterleiten einer von einer Endeinrichtung kommenden Nutzeräußerung an wenigstens einige der zugeordneten Dialogeinrichtungen sowie eine zweite Einrichtung auf, die unter Ansprechen auf die von den Dialogeinrichtungen empfangenen Systemnachrichten eine Systemnachricht auswählt und die darin enthaltene Systemäußerung an die Endeinrichtung überträgt.

Um dem Nutzer eine optimierte Systemäußerung, das kann eine Systemantwort oder eine Systemfrage sein, übermitteln zu können, weist die zweite Einrichtung der ersten Vermittlungseinrichtung eine Detektoreinrichtung zum Erfassen der Kennung und des Identifizierungscodes auf, die in einer Systemnachricht empfangen werden. Ferner ist ein Speicher zum Ablegen einer Prioritätenliste in der zweiten Einrichtung enthalten. Eine Entscheidungseinrichtung, die separat oder integriert mit der Detektoreinrichtung ausgebildet sein kann, wählt unter Verwendung der Prioritätenliste und des Ausgangssignals der Detektoreinrichtung die Systemäußerung einer bestimmten Dialogeinrichtung zur Weiterleitung an die Endeinrichtung aus. Die Prioritätenliste enthält die Identifikationscodes jeder der ersten Vermittlungseinrichtung zugeordneten Dialogeinrichtung sowie die der jeweiligen Dialogeinrichtung zugeordneten Priorität.

Da die von den Dialogeinrichtungen empfangenen Systemnachrichten in der Regel nicht gleichzeitig in der ersten Vermittlungseinrichtung verarbeitet werden können, beispielsweise weil die Systemnachrichten von unterschiedlichen Dialogsystemen zu unterschiedlichen Zeitpunkten eingehen, ist in der zweiten Einrichtung der ersten Vermittlungseinrichtung ein Speicher zum Ablegen der empfangenen Systemnachrichten oder auch nur der Systemäußerungen vorgesehen.

Die Entscheidungseinrichtung ist beispielsweise derart implementiert, dass sie den Identifikationscode der ausgewählten Dialogeinrichtung als Speicheradresse an den Speicher anlegt, damit die zur Endeinrichtung zu übertragende Systemäußeruhg ausgelesen werden kann.

Um die Endeinrichtung mit Dialogeinrichtungen verschiedener Hersteller verbinden zu können, und unterschiedliche Dialogeinrichtungen ohne größeren Aufwand an das bestehende Dialogsystem anschalten zu können, ist der Endeinrichtung eine Nutzerschnittstelle zum Bereitstellen eines ersten Kommunikationsprotokolls und/oder Datenformats zum Datenaustausch mit der ersten Vermittlungseinrichtung zugeordnet. Darüber hinaus weist jede Dialogeinrichtung eine Schnittstelle zum Bereitstellen eines zweiten Kommunikationsprotokolls und/oder Datenformats zum Datenaustausch mit der ersten Vermittlungseinrichtung auf. Ferner enthält die erste Einrichtung der ersten Vermittlungseinrichtung eine Umsetzungseinrichtung zum Umsetzen des ersten Kommunikationsprotokolls und/oder Datenformats in das zweite Kommunikationsprotokoll und/oder Datenformat und umgekehrt.

Um beispielsweise zu vermeiden, dass ein Nutzer unverhältnismäßig lange auf eine Reaktion einer Dialogeinrichtung warten muss, ist in der ersten Vermittlungseinrichtung ein Zeitgeber zum Überwachen des Empfangs einer Systemnachricht innerhalb einer vorbestimmten Zeitspanne implementiert. Beispielsweise kann nach Ablauf der vorbestimmten Zeitspanne die Nutzeräußerung erneub von der ersten Vermittlungseinrichtung an die Dialogeinrichtungen übermittelt werden, oder aber die erste Vermittlungseinrichtung berücksichtigt nur die innerhalb der vorgegebenen Zeitspanne eingegangenen Systemäußerungen.

Sowohl die erste Vermittlungseinrichtung als auch die in einen entsprechenden Dialog involvierten Dialogeinriohtungen können über die Häufigkeit, mit der ihre Systemäußerungen zur Endeinrichtung übertragen werden, Protokoll führen. Hierzu weist beispielsweise die erste Vermittlungseinrichtung eine Bestätigungseinrichtung auf, die eine Bestätigungsnachricht an die Dialogeinrichtung übermittelt, deren Systemäußerung an die Endeinrichtung weitergeleitet worden ist. Zumindest einige der Dialogeinrichtungen weisen dementsprechend jeweils eine Einrichtung zum Zählen und Auswerten der empfangenen Bestätigungsnachrichten auf. Auf diese Art und Weise ist es möglich, dass beispielsweise eine zielgerichtete Dialogeinrichtung, die während einer bestimmten Zeitspanne nicht mehr in den Dialog einbezogen worden ist, eine vorbestimmte, zielgerichtete Systemnachricht erzeugt, die von der Detektoreinrichtung und der Entscheidungseinrichtung in der ersten Vermittlungseinrichtung direkt zur Endeinrichtung durchgeschaltet wird.

Mit Hilfe der Protokollierung der Häufigkeit, mit der Systemäußerungen einer Dialogeinrichtung weitergegeben werden, ist es möglich, die Prioritätenliste während eines bestehenden Dialoges dynamisch an den Dialogverlauf anzupassen. Beispielsweise kann einer Dialogeinrichtung nachträglich eine höhere Priorität in der Prioritätenliste zugeordnet werden, wenn beispielsweise die Systemäußerungen dieser Dialogeinrichtung sehr häufig zur Endeinrichtung weitergeleitet werden. Beispielsweise ist es auch möglich, dass der Nutzer selbst die Prioritätenliste ändern kann, indem er beispielsweise die Art des gewünschten Dialoges der ersten Vermittlungseinrichtung mitteilt. Dadurch kann von vorneherein, in Abhängigkeit des Dialogwunsches eines Nutzers, der entsprechenden Dialogeinrichtung in der Prioritätenliste eine höhere Priorität zugeordnet werden.

Zur weiteren Optimierung der Dialoganlage kann jeder Dialogeinrichtung eine Unter-Vermittlungseinrichtung zugeordnet sein, wobei jeder Unter-Vermittlungseinrichtung wiederum mehrere Unter-Dialogeinrichtungen zugeordnet sein können.' Die Unter-Vermittlungseinrichtung weist zu diesem Zweck eine Einrichtung auf, die eine von der jeweils zugeordneten Dialogeinrichtung weitergeleiteten Nutzeräußerung an wenigstens einige der zugeordneten Unter-Dialogeinrichtungen übermittelt. Ferner ist eine Einrichtung vorgesehen, die unter Ansprechen auf die von den Unter-Dialogeinrichtungen empfangenen Systemnachrichten eine Systemnachricht auswählt und diese zur ersten ' Vermittlungseinrichtung übermittelt. Nach dieser Vorgewichtung von Systemnachrichten wählt dann die erste Vermittlungseinrichtung in der oben beschriebenen Art und Weise die Systemnachricht aus, deren Systemäußerung zur Endeinrichtung überragen werden soll.

Alternativ oder ergänzend kann die Leistungsfähigkeit und Präzision der Dialoganlage dadurch erhöht werden, dass eine zweite Vermittlungseinrichtung zwischen die Endeinrichtung und mehrere erste Vermittlungseinrichtungen geschaltet wird. Die zweite Vermittlungseinrichtung weist eine erste Einrichtung zum Weiterleiten einer von der Endeinrichtung kommenden Nutzeräußerung an wenigstens einige der ersten Vermittlungseinrichtungen auf. Ferner ist eine zweite Einrichtung implementiert, die unter Ansprechen auf die von den ersten Vermittlungseinrichtungen kommenden Systemnachrichten eine Systemnachricht auswählt und die darin enthaltene Systemäußerung an die Endeinrichtung überträgt.
Bei diesem Lösungsansatz muss die erste Vermittlungseinrichtung zum Weiterleiten einer ausgewählten Systemnachricht an die zweite Vermittlungseinrichtung ausgebildet sein. Mit anderen Worten überträgt die erste Vermittlungseinrichtung'in diesem Fall nicht nur die Systemäußerung sondern auch die von der jeweiligen Dialogeinrichtung in die Systemnachricht eingebundene Kennung und den Identifizierungscode.

Die Vermittlungseinrichtungen und/oder Unter-Vermittlungseinrichtungen sind derart ausgebildet, dass sie das Dialogende den jeweiligen Dialogeinrichtungen bzw. Unter-Dialogeinrichtungen mitteilen können.' Hierbei kann das Dialogende von einer bestimmten Dialogeinrichtung bzw. Unterdialogeinrichtung oder vom Nutzer, zum Beispiel durch Auflegen des Telefonhörers, selbst ausgelöst werden.

Das oben angegebene technische Problem löst die Erfindung ferner durch die Merkmale des Anspruchs 14.

Danach umfasst die Dialoganlage wenigstens eine Endeinrichtung, an der ein Nutzer eine Nutzeräußerung eingeben kann. Ferner sind mehrere miteinander verbindbare Dialogeinrichtungen vorgesehen, die mit der Endeinrichtung verbunden werden können. Jede Dialogeinrichtung weist eine Einrichtung zum Empfangen und Auswerten eienr von der Endeinrichtung erzeugten Nutzeräußerung sowie eine Einrichtung zum Erzeugen einer Systemnachricht in Abhängigkeit von der ausgewerteten Nutzeräußerung auf. Darüber hinaus ist eine Entscheidungseinrichtung zum Weiterleiten der Nutzeräußerung zu einer anderen Dialogeinrichtung oder zum Weiterleiten einer erzeugten Systemnachricht an die Endeinrichtung in Abhängigkeit von der ausgewerteten Nutzeräußerung vorgesehen. Beispielsweise können die Dialogeinrichtungen hintereinander geschaltet sein, so dass eine Dialogeinrichtung eine Nutzeräußerung immer dann an die nächstfolgende Dialogeinrichtung weitergibt, wenn sie selbst keine geeignete Systemnachricht auf eine empfangene Nutzeräußerung erzeugen kann.

Die Erfindung wird nachstehend anhand mehrerer Ausführungsbeispiele in Verbindung mit,den beiliegenden Figuren näher erläutert.
- Fig. 1: zeigt eine mehrere verschiedene Dialogexperten umfassende Dialoganlage, in dem die Erfindung verwirklicht ist;
- Fig. 2: zeigt eine alternative Ausführungsform einer Dialoganlage in dem die Erfindung verwirlicht ist
- Fig. 3: zeigt eine alternative Ausführungsform einer erfindungsgemäßen Dialoganlage mit hintereinander geschalteten Dialogexperten; und
- Fig. 4: zeigt ein prinzipielles Blockschaltbild'eines erfindungsgemäßen Vermittlers, der in Fig. 1 gezeigt ist.

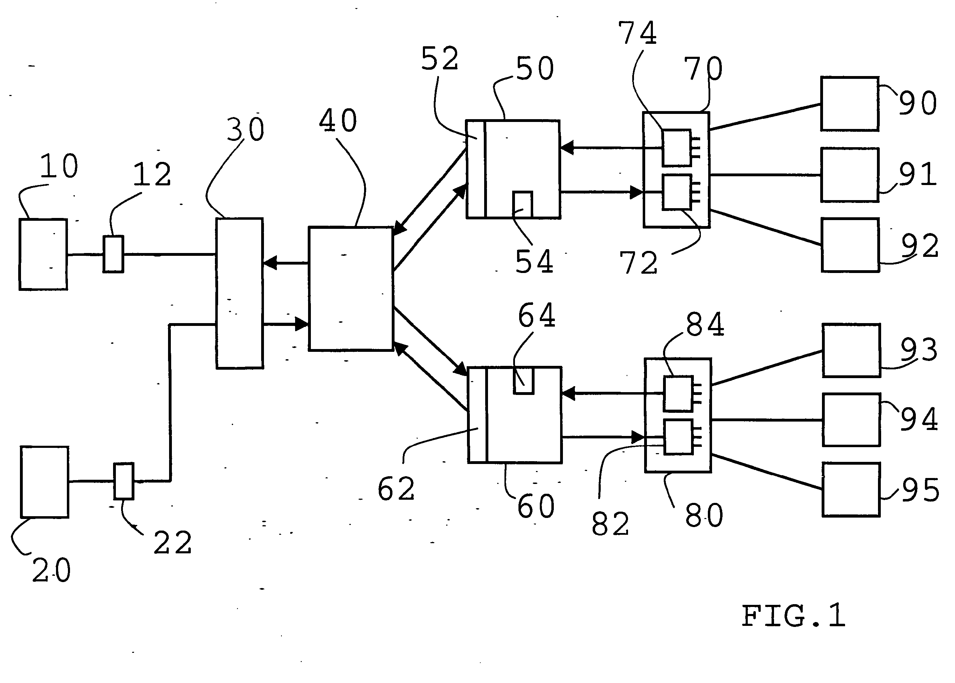

Fig. 1 zeigt ein bevorzugtes Ausführungsbeispiel einer Dialoganlage, welche der besseren und einfacheren Darstellung wegen nur ausschnittsweise dargestellt ist. So sind lediglich zwei Endeinrichtungen 10 und 20 gezeigt, die jeweils über eine Nutzerschnittstelle 12 bzw. 22 mit einer Teilnehmervermittlungsstelle 30 verbunden sind. Die Nutzerschnittstellen 12 und 22 stellen ein Kommunikationsprotokoll und/oder Datenformat bereit, über das die Endeinrichtungen mit einem Vermittler 40 Daten austauschen können. Beispielsweise handelt es sich bei der Endeinrichtung 10 um ein Telefon und bei der Endeinrichtung 20 um ein multimodales Terminal. Über die Teilnehmervermittlungsstelle 30 kann ein Nutzer unter Wahl einer bestimmten Adresse eine Verbindung zum Vermittler 40 aufbauen, der nachfolgend noch detaillierter beschrieben wird. Dem Vermittler 40 sind mehrere unterschiedliche Dialogexperten zugeordnet, von denen lediglich die beiden Dialogexperten 50 und 60 dargestellt sind. Für die nachfolgende Beschreibung sei angenommen, dass der Dialogexperte 50 für einen zielgerichteten Dialog, beispielsweise für eine Telefonauskunft geeignet ist, und der Dialogexperte 60 einen sogenannten Chat-Bot für einen plaudernden Dialog darstellt.

Die Dialogexperten 50 und 60 weisen jeweils eine Schnittstelle 52 bzw. 62 auf, die ein bestimmtes Kommunikationsprotokoll und/oder Datenformat zum Datenaustausch mit dem Vermittler 40 bereitstellen.

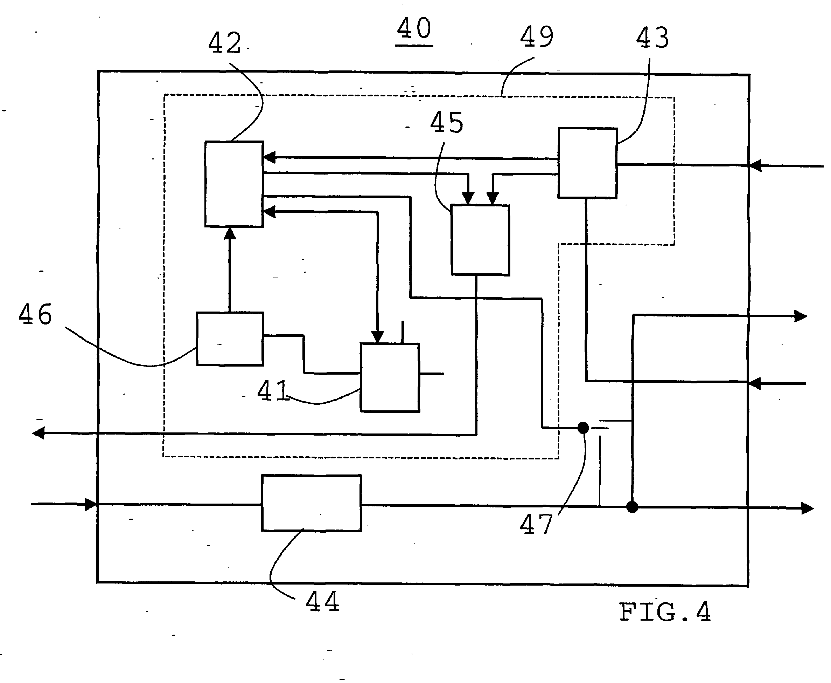

Der Vermittler 40 ist detaillierter in Fig. 4 dargestellt. Zunächst weist der Vermittler 40 eine Umsetzungseinrichtung 44 auf, die eine Kommunikationsprotokoll- und/oder Datenformat-Anpassung zwischen den Schnittstellen 52 und 62 der Dialogexperten 50 bzw. 60 und den Nutzerschnittstellen 12 und 22 der Endeinrichtungen 10 bzw. 20 vornimmt. Auf diese Weise ist es möglich, beliebige Endeinrichtungen mit beliebigen Dialogexperten zu verbinden. Der in Fig. 4 dargestellte Vermittler 40 weist ferner eine Detektoreinrichtung 43 auf, die zum Erfassen von Systemnachrichten vorgesehen ist, die von den Dialogexperten 50 und 60 erzeugt werden können. Eine Systemnachricht setzt sich beispielsweise aus der eigentlichen, für eine Endeinrichtung bestimmte Systemäußerung, einem Identifizierungscode des jeweiligen Dialogexperten und einer Kennung zusammen. Die Kennung kann einer harten Entscheidung entsprechen, die lediglich signalisiert, dass die Systemnachricht eine Systemäußerung enthält. Die Kennung kann auch einer weichen Entscheidung entsprechen, indem sie die Güte einer Systemäußerung in bezug auf eine ausgewertete Nutzeräußerung angibt. Bei einer harten Entscheidung kann die Kennung durch die Binärziffer "0", d. h. keine Systemäußerung, oder durch eine "1", d. h., eine Systemäußerung ist erzeugt worden, dargestellt werden. Bei einer Angabe über die Güte der erzeugten Systemäußerung kann die Kennung eine Zahl zwischen 0 und 100 darstellen, um das Gütemaß zu bestimmen. So entspricht beispielsweise die Zahl 100 einer Systemäußerung, die optimal auf die ausgewertete Nutzeräußerung zutrifft.

Die Detektoreinrichtung 43 ist in der Lage, die Kennung und den Identifizierungscode einer empfangenen Systemnachricht zu erfassen und einer Entscheidungseinrichtung 42 zuzuführen. Die Entscheidungseinrichtung 42 ist ferner mit einem Speicher 46 verbunden, in dem eine Prioritätenliste abgelegt ist. Die Prioritätenliste enthält für das vorliegende Beispiel die Identifizierungscodes der beiden Dialogexperte 50 und 60 sowie die den beiden Dialogexperten zugewiesenen Prioritäten. Beispielsweise genießt der Dialogexperte 50 eine höhere Priorität als der Dialogexperte 60. Die Detektoreinrichtung 43 kann mit einem Speicher 45 verbunden sein, in dem die gesamte Systemnachricht oder lediglich die in einer Systemnachricht enthaltene Systemäußerung abgelegt wird. Die Entscheidungseinrichtung 42 ist ebenfalls mit dem Speicher 45 verbunden, um vorbestimmte Systemäußerungen zur Weiterleitung an eine Endeinrichtung auswählen zu können. Die Entscheidungseinrichtung 42 verfügt hierzu über eine Logik, die in Abhängigkeit von der Prioritätenliste im Speicher 46 und von der vom Detektor 43 erfassten in einer Systemnachricht erfassten Kennung entscheiden kann, ob die Systemnachricht des Dialogexperten 50 oder des Dialogexperten 60 an eine Endeinrichtung weitergeleitet werden soll. Ferner kann die Entscheidungseinrichtung 42 eine Bestätigungsnachricht für den Dialogexperten erzeugen, dessen Systemäußerung zu einer Endeinrichtung weitergeleitet worden ist. Über einen Schalter 47 wird die erzeugte Bestätigungsnachricht auf die Ausgangsleitung gelegt, die zu dem entsprechende Dialogexperten führt.

Eine den Vermittler 40 überwachende und steuernde Steuereinheit 41 kann beispielsweise protokollieren, wie häufig eine Systemäußerung der beiden Dialogexperten 50 und 60 während einer Dialogsitzung an die entsprechende Endeinrichtung weitergeleitet worden ist.

In Ergänzung hierzu können die Dialogexperten 50 und 60 jeweils eine Zähl- und Auswerteeinrichtung 54 bzw. 64 aufweisen, um die Häufigkeit der von ihnen erzeugten und an eine Endeinrichtung weitergeleiteten Systemnachrichten während eine Dialogsitzungmit einer Endeinrichtung zu ermitteln. Die Zähl- und Auswerteeinrichtungen 54 und 64 sorgen ferner dazu, daß ein Dialogexperte eine vorbestimmte, vorzugsweise zielgerichtete Systemäußerung erzeugen kann, wenn innerhalb einer vorbestimmten Zeitspanne keine Systemäußerung von ihm mehr vom Vermittler 40 an eine Endeinrichtung weitergeleitet worden ist. Diese vorbestimmte Systemäußerung wird vom Vermittler sofort zur Endeinrichtung durchgeschaltet wird.

In Abhängigkeit davon, wie viele erzeugte Systemäußerungen von den Dialogexperten 50 und 60 an die jeweilige Endeinrichtung weitergeleitet worden sind, kann die Steuereinheit 41 eine Anpassung der Prioritätenliste im Speicher 46 vornehmen. Sollte sich nämlich während einer Dialogsitzung herausstellen, dass die Systemäußerungen vom Dialogexperten 60 viel häufiger als vom Dialogexperten 50 bereitgestellt werden, kann dem Dialogexperten 60 während dieser Dialogsitzung eine höhere Priorität als dem Dialogexperten 50 zugeordnet werden. Ebenfalls ist es denkbar, eine nutzergesteuerte Anpassung der Prioritätenliste für eine'bestimmte Dialogsitzung zu ermöglichen. Wenn zum Beispiel der Nutzer lediglich "plaudern" möchte, und keine zielgerichteten Informationen benötigt, kann er über seine Endeinrichtung einen entsprechende Steuerparameter zum Vermittler 40 übertragen, woraufhin die Steuereinheit 41 die Priorität des Dialogexperten 60 gegenüber dem Dialogexperten 50 erhöht.

Alternativ kann die Prioritätenliste auch die Auslastungen der beteiligten Dialogexperten widerspiegeln, wobei die höchste Priorität dem am geringsten ausgelasteten Dialogexperten zugeordnet ist. Jeder Dialogexperte kann hierzu seine Auslastung ermitteln und dem zugeordeten Vermittler bereitstellen. Darüber hinaus könnte der Vermittler selbst die Auslastungen der beteiligten Dialogexperten aus den jeweiligen Antwortzeiten schätzen.

Um dem Benutzer eine höhere Dialogqualität anbieten zu können, kann dem Dialogexperten 50 ein Unter-Vermittler 70 und dem Dialogexperten 60 ein Unter-Vermittler 80 zugeordnet sein. Dem Unter-Vermittler 70 sind drei weitere Dialogexperten.90, 191 und 92 zugeordnet, wohingegen dem Unter-Vermittler 80 drei andere Dialogexperten 93, 94 und 95 zugeordnet sind. Prinzipiell können die Unter-Vermittler 70 und 80 ähnlich dem Vermittler 40 aufgebaut sein. So weisen die Unter-Vermittler 70 und 80 jeweils eine Einrichtung 72 bzw. 82 auf, die die vom jeweiligen Dialogexperten 50 bzw. 60 weitergeleitete Nutzeräußerung an wenigstens einige der zugeordneten Unter-Dialogexperte 90 bis 92 bzw. 93 bis 95 weiterleitet. In umgekehrter Richtung sind in den Unter-Vermittlern 70 und 80 jeweils eine Detektor- und Entscheidungseinrichtung 74 bzw. 84 implementiert, die unter Ansprechen auf die von den Unter-Dialogexperten 90 bis 92 bzw. 93 bis 95 empfangenen Systemnachrichten eine Systemnachricht auswählt und diese direkt oder über den zugeordneten Dialogexperten 50 bzw. 60 zum Vermittler 40 übermittelt.

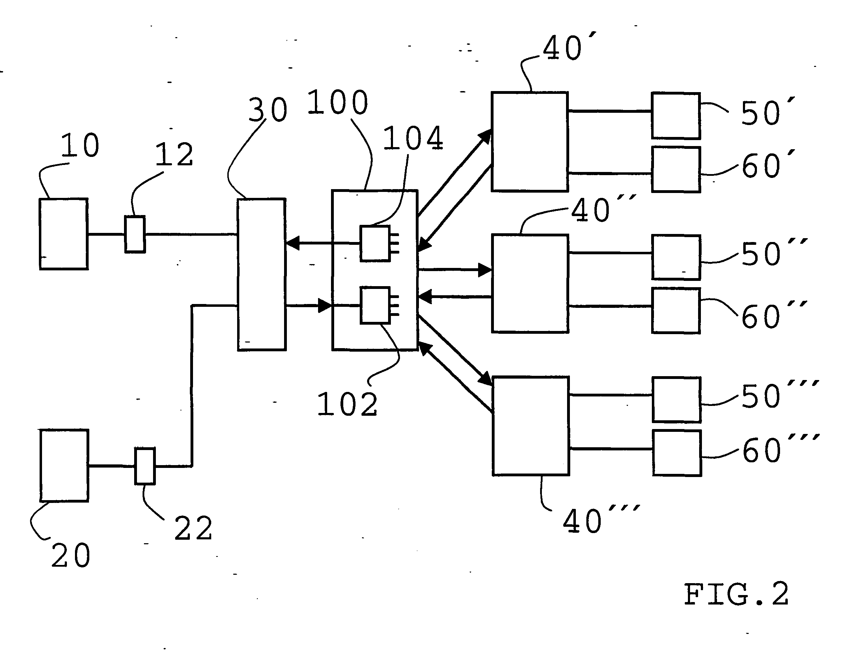

Fig. 2 zeigt eine alternative Ausführungsform eines Dialogsystems, mit dem einem Nutzer ein verbesserter Dialog angeboten werden kann. Wiederum sind zwei Endeinrichtungen 10 und 20 über entsprechende Nutzerschnittstellen 12 bzw. 22 mit einer Teilnehmervermittlungsstelle 30 verbunden. Die Teilnehmervermittlungsstelle 30 kann die Endgeräte 10 und 20 mit einem Hauptvermittler 100 verbinden, der wiederum mit mehreren Vermittlern verbunden ist. Lediglich der besseren Darstellung wegen sind nur drei Vermittler 40' , 40" und 40"' dargestellt. Der Vermittler 40' ist beispielsweise mit zwei Dialogexperten 50' und 60', der Vermittler 40" mit den Dialogexperten 50" und 60" und der dritte Vermittler 40"' mit den Dialogexperten 50"' und 60"' verbunden. Der Hauptvermittler 100 weist eine Übertragungseinrichtung 102 auf, die die von einer Endeinrichtung kommende Nutzeräußerung an wenigstens einige der Vermittlungseinrichtungen 40', 40" und 40"' weiterleitet. Ein Unterschied zwischen der Vermittlungseinrichtung 40 nach Fig. 1 und den Vermittlungseinrichtungen 40', 40" und 40"' nach Fig. 2 besteht darin, das die letztgenannten Vermittlungseinrichtungen nicht nur die Systemäußerung sondern die gesamte Systemnachricht eines ausgewählten Dialogexperten an den Hauptvermittler 100 weiterleiten. Der Hauptvermittler 100 weist hierzu eine Detektor- und Entscheidungseinrichtung 104 auf, die unter Ansprechen auf die von den Vermittlern 40', 40" und 40"' kommenden Systemnachrichten eine optimale Systemnachricht auswählt und die darin enthaltene Systemäußerung an die entsprechende Endeinrichtung 10 oder 20 weiterleitet.

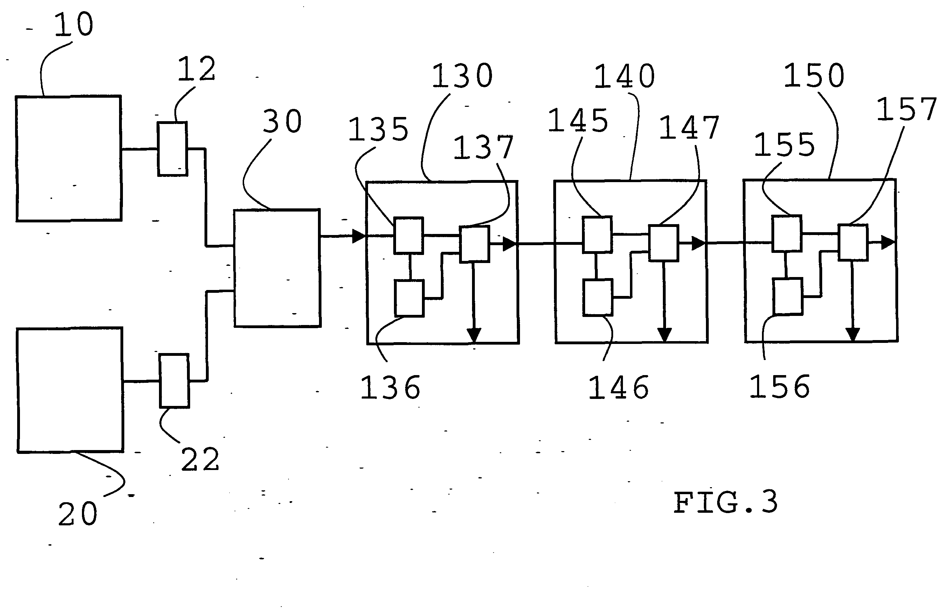

In Fig. 3 ist eine weitere Ausführungsform eines Dialogsystems dargestellt, bei dem wiederum Endeinrichtungen 10 und 20 über entsprechende Nutzerschnittstellen 12 bzw. 22 mit einer Teilnehmervermittlungsstelle 30 verbunden sind. Ferner weist das Dialogsystem eine Kettenschaltung von beispielsweise drei Dialogexperten 130, 140 und 150 auf, die mit den Endeinrichtungen 10 und 20 einen Dialog führen können. Jeder Dialogexperte 130, 140 und 150 weist eine Empfangs- und Auswerteeinrichtung 135, 145 bzw. 155 zum Empfangen und Auswerten einer von einer Endeinrichtung erzeugten Nutzeräußerung auf. Darüber hinaus enthält jeder Dialogexperte 130; 140 und 150 eine Einrichtung 136, 146 bzw. 156 zum Erzeugen einer geeigneten Systemnachricht in Abhängigkeit von der ausgewerteten Nutzeräußerung. In jedem Dialogexperten 130, 140 und 150 ist eine Entscheidungseinrichtung 137, 147 und 157 implementiert. Die Entscheidungseinrichtungen 137, 147 und 157 können die von einer Endeinrichtung erhaltene Nutzeräußerung an den nachfolgenden Dialogexperten weiterzuleiten, wenn erkennt wird, dass der jeweilige Dialogexperte auf die empfangene Nutzeräußerung keine geeignete Systemäußerung erzeugt kann. Die Entscheidungseinrichtungen 137, 147 und 157 sind ferner in der Lage, eine erzeugte Systemäußerung an die jeweilige Endeinrichtung zu übertragen. Im vorliegenden Beispiel sei angenommen, dass die Endeinrichtung 10 über die Vermittlungsstelle 30 mit dem Dialogexperten 130 verbunden worden sei. Ferner sei angenommen, dass der Dialogexperte 130 keine geeignete Systemäußerung auf die von der Endeinrichtung 10 kommende Nutzeräußerung erzeugen kann, so dass die Nutzeräußerung an den Dialogexperten 140 weitergeleitet wird. Da der Dialogexperte 140 eine geeignete Systemäußerung erzeugen kann, wird nunmehr eine Verbindung zwischen der Endeinrichtung 10 und dem Dialogexperten 140 aufgebaut, und die erzeugte Systemäußerung zur Endeinrichtung 10 übertragen.

An dieser Stelle sei noch angemerkt, dass vorzugsweise alle Vermittler, Untervermittler, Dialogeinrichtungen und Unter-Dialogeinrichtungen zum parallelen, d. h. gleichzeitigen Abwickeln von Dialogen mit mehreren Nutzern ausgebildet sein können.

Mit Hilfe der vorgeschlagenen Dialogsysteme ist es nunmehr möglich, Plauderpassagen innerhalb von überwiegend zielgerichteten Dialogsitzungen einzufügen, um zu verhindern, dass ein Dialog abgebrochen wird oder in einer Dialog-Schleife endet, wenn ein zielgerichteter Dialogexperte eine Nutzeräußerung nicht mehr sinnvoll beantworten kann. Nutzeräußerungen, die außerhalb der modellierten Domäne eines zielgerichteten Dialogexperten liegen, können dann im "Plauderstil" mit Hilfe eines sogenannten Chat-Bots behandelt werden. Damit ist die Möglichkeit eröffnet, die gegebenen technologischen Grenzen der einzelnen Dialogexperten nutzerfreundlich zu überspielen. Insgesamt führt die Leistungsfähigkeit der vorgeschlagenen Dialogsysteme, Zielabweichungen eines Nutzers handhaben zu können, zu erfolgreicheren und nutzerfreundlicheren Dialogen.

### Bezugszeichenliste

- 10, 20: Endeinrichtung
- 12, 22: Nutzerschnittstelle
- 30: Teilnehmer-Vermittlungsstelle
- 40: Vermittler
- 40', 40", 40"': Vermittler
- 41: Steuereinheit
- 42: Entscheidungseinrichtung
- 43: Detektoreinrichtung
- 44: Umsetzungseinrichtung
- 45: Speicher für Systemnachrichten
- 46: Speicher für Prioritätenliste
- 47: Schalter
- 50, 60: Dialogeinrichtung; Dialogexperte
- 50', 50", 50"': Dialogeinrichtung; Dialogexperte
- 60', 60", 60"': Dialogeinrichtung; Dialogexperte
- 52: Schnittstelle
- 54: Zähl- und Auswerteeinrichtung
- 62: Schnittstelle
- 64: Zähl- und Auswerteeinrichtung
- 70, 80: Unter-Vermittler
- 72: Einrichtung zur Übertragung einer Nutzeräußerung
- 74: Detektor- und Entscheidungseinrichtung
- 82: Einrichtung zur Übertragung einer Nutzeräußerung
- 84: Entscheidungs- und Detektoreinrichtung
- 90 bis 95: Unter-Dialogeinrichtung; Unter-Dialogexperte
- 100: Hauptvermittler
- 102: Einrichtung zur Weiterleitung einer Nutzeräußerung
- 104: Detektor- und Entscheidungseinrichtung
- 130: Dialogexperte; Dialogeinrichtung
- 135: Empfangs- und Auswerteeinrichtung
- 136: Einrichten zum Erzeugen einer Systemäußerung
- 137: Entscheidungseinrichtung
- 140: Dialogeinrichtung; Dialogexperte
- 145: Empfangs- und Auswerteeinrichtung
- 146: Einrichtung zum Erzeugen einer Systemäußerung
- 147: Entscheidungseinrichtung
- 150: Dialogeinrichtund; Dialogexperte
- 155: Empfangs- und Auswerteeinrichtung
- 156: Einrichtung zum Erzeugen einer Systemäußerung
- 157: Entscheidungseinrichtung

## Patentansprüche

1. Dialoganlage für eine Mensch-Maschine-Interaktion mit kooperierenden Dialogeinrichtungen, umfassend
wenigstens eine Endeinrichtung (10, 20), an der ein Nutzer eine Nutzeräußerung eingeben kann;
wenigstens eine erste Vermittlungseinrichtung (40; 40', 40", 40"'), die mit der Endeinrichtung (10, 20) verbindbar ist, so dass der Nutzer mit der Vermittlungseinrichtung in Verbindung treten kann;
mehrere unterschiedliche der ersten Vermittlungseinrichtung (40) zugeordnete Dialogeinrichtungen (50, 60), die unter Ansprechen auf eine Nutzeräußerung Systemnachrichten erzeugen können,
wobei die erste Vermittlungseinrichtung (40) eine erste Einrichtung (44) zum Weiterleiten einer von einer Endeinrichtung kommenden Nutzeräußerung an wenigstens einige der zugeordneten Dialogeinrichtungen (50, 60) aufweist,
**dadurch gekennzeichnet, dass**
die erste Vermittlungseinrichtung (40) eine zweite Einrichtung (49) aufweist, die unter Ansprechen auf die von den Dialogeinrichtungen (50, 60) empfangenen Systemnachrichten eine Systemnachricht auswählt und die darin enthaltene Systemäußerung an die Endeinrichtung (10, 20) überträgt, so dass die Vermittlungseinrichtung (40) dem Nutzer in Abhängigkeit von seiner Nutzeräußerung aus den Systemäußerungen verschiedener Dialogeinrichtungen eine ausgewählte Systemäußerung liefert.

2. Dialoganlage nach Anspruch 1,
**dadurch gekennzeichnet, dass**
die von einer Dialogeinrichtung (50, 60) unter Ansprechen auf eine Nutzeräußerung erzeugte Systemnachricht eine für die Endeinrichtung (10, 20) bestimmte Systemäußerung, einen die Dialogeinrichtung (50, 60) identifizierenden Identifikationscode und/oder eine Kennung enthält, wobei die Kennung signalisiert, ob eine Systemäußerung für eine Endeinrichtung erzeugt worden ist oder nicht, oder welche Güte die erzeugte Systemäußerung besitzt, und dass
die zweite Einrichtung (49) der ersten Vermittlungseinrichtung (40) eine Detektoreinrichtung (43) zum Erfassen der Kennung und des Identifizierungscodes einer Systemnachricht, einen Speicher (46) zum Ablegen einer Prioritätenliste über die zugeordneten Dialogeinrichtungen und eine Entscheidungseinrichtung (42) aufweist, die unter Verwendung der gespeicherten Prioritätenliste und des Ausgangssignals der Detektoreinrichtung (43) die Systemäußerung einer bestimmten Dialogeinrichtung (50, 60) zur Weiterleitung an die Endeinrichtung (10, 20) auswählt.

3. Dialoganlage nach Anspruch 1 oder 2,
**dadurch gekennzeichnet, dass**
die zweite Einrichtung (49) der ersten Vermittlungseinrichtung (40) einen Speicher (45) zum Ablegen der empfangenen Systemnachrichten enthält.

4. Dialoganlage nach einem der Ansprüche 1 bis 3,
**dadurch gekennzeichnet, dass**
der Endeinrichtung (10, 20) eine Nutzerschnittstelle (12, 22) zum Bereitstellen eines ersten Kommunikationsprotokolls und/oder Datenformats zum Datenaustausch mit der ersten Vermittlungseinrichtung (40) zugeordnet ist, dass
die Dialogeinrichtungen (50, 60) jeweils eine Schnittstelle (52, 62) zum Bereitstellen eines zweiten Kommunikationsprotokolls und/oder Datenformats zum Datenaustausch mit der ersten Vermittlungseinrichtung (40) enthalten, und dass
die erste Einrichtung der ersten Vermittlungseinrichtung eine Umsetzungseinrichtung (44) zum Umsetzen des ersten Kommunikationsprotokolls und/oder Datenformats in das zweite Kommunikationsprotokoll und/oder Datenformat und umgekehrt aufweist.

5. Dialoganlage nach einem der Ansprüche 1 bis 4,
**dadurch gekennzeichnet, dass**
die erste Vermittlungseinrichtung (40) einen Zeitgeber zum Überwachen des Empfangs einer Systemnachricht innerhalb einer vorbestimmten Zeitspanne aufweist.

6. Dialoganlage nach einem der Ansprüche 2 bis 5,
**dadurch gekennzeichnet, dass**
die erste Vermittlungseinrichtung (40) eine Bestätigungseinrichtung zum Übermitteln einer Bestätigungsnachricht an die Dialogeinrichtung (50, 60) aufweist, deren Systemäußerung an die Endeinrichtung (10, 20) weitergeleitet worden ist.

7. Dialoganlage nach Anspruch 6,
**dadurch gekennzeichnet, dass**
zumindest einige der Dialogeinrichtungen (50, 60) eine Einrichtung (54, 64) zum Zählen und Auswerten der empfangenen Bestätigungsnachrichten aufweisen.

8. Dialoganlage nach Anspruch 7,
**dadurch gekennzeichnet, dass**
die Dialogeinrichtungen (50, 60) unter Ansprechen auf die Zähl- und Auswerteeinrichtung (54, 64) eine vorbestimmte Systemnachricht erzeugen können, und dass die Detektoreinrichtung (43) in der ersten Vermittlungseinrichtung (40) unter Ansprechen auf eine vorbestimmte Systemnachricht die Entscheidungseinrichtung (42) veranlasst, die dazugehörige Systemäußerung zur Endeinrichtung (10, 20) zu übertragen.

9. Dialoganlage nach einem der Ansprüche 2 bis 8,
**dadurch gekennzeichnet, dass**
die in der ersten Vermittlungseinrichtung (40) abgelegte Prioritätenliste (46) veränderbar ist.

10. Dialoganlage nach einem der Ansprüche 1 bis 9,
**dadurch gekennzeichnet, dass**
jeder Dialogeinrichtung (50; 60) eine Unter-Vermittlungseinrichtung (70; 80) zugeordnet ist, und dass
jeder Unter-Vermittlungseinrichtung (70; 80) mehrere Unter-Dialogeinrichtungen (90-92; 93-95) zugeordnet sind.

11. Dialoganlage nach Anspruch 10,
**dadurch gekennzeichnet, dass**
jede Unter-Vermittlungseinrichtung (70; 80) folgende Merkmale aufweist:
eine Einrichtung (72, 82) zum Übermitteln einer von der jeweils zugeordneten Dialogeinrichtung (50; 60) weitergeleiteten Nutzeräußerung an wenigstens einige der zugeordneten Unter-Dialogeinrichtungen (90-92; 93-95), und
eine Einrichtung (74; 84), die unter Ansprechen auf die von den Unter-Dialogeinrichtungen (90-92; 93-95) empfangenen Systemnachrichten eine Systemnachricht auswählt und zur ersten Vermittlungseinrichtung (40) übermittelt.

12. Dialoganlage nach einem der Ansprüche 1 bis 11,
**dadurch gekennzeichnet, dass**
zielgerichtete und plaudernde Dialogeinrichtungen verwendbar sind.

13. Dialoganlage nach einem der Ansprüche 1 bis 12,
**dadurch gekennzeichnet, dass**
eine zweite Vermittlungseinrichtung (100) mit der Endeinrichtung (10, 20) und mehreren ersten Vermittlungseinrichtungen (40', 40", 40"') verbunden ist, wobei die zweite Vermittlungseinrichtung (100) aufweist:
eine erste Einrichtung (102) zum Weiterleiten einer von der Endeinrichtung (10, 20) kommenden Nutzeräußerung an wenigstens einige der ersten Vermittlungseinrichtungen (40), und
eine zweite Einrichtung (104), die unter Ansprechen auf die von den ersten Vermittlungseinrichtungen (40', 40", 40"') kommenden Systemnachrichten eine Systemnachricht auswählt und die darin enthaltene Systemäußerung an die Endeinrichtung (10, 20) überträgt, und wobei
die ersten Vermittlungseinrichtungen (40', 40", 40"') zum Weiterleiten einer ausgewählten Systemnachricht an die zweite Vermittlungseinrichtung (100) ausgebildet sind.

## Claims

1. Dialog system for a man-machine interaction having cooperating dialog devices, comprising
at least one terminal device (10, 20), at which a user can input a user statement;
at least one first switching device (40; 40', 40", 40"'), which can be connected to the terminal device (10, 20) so that the user can connect to the switching device;
multiple different dialog devices (50, 60), associated with the first switching device (40), which can generate system messages in response to a user statement,
wherein the first switching device (40) has a first device (44) for relaying a user statement coming from a terminal device to at least some of the associated dialog devices (50, 60),
**characterized in that**
the first switching device (40) has a second device (49) that, in response to the system messages received from the dialog devices (50, 60), selects a system message and transmits the system statement contained therein to the terminal device (10, 20), so that the switching device (40) transmits to the user a system statement selected as a function of his user statement from among the system statements from different dialog devices.

2. Dialog system according to claim 1,
**characterized in that**
the system message generated by a dialog device (50, 60) in response to a user statement contains a system statement intended for the terminal device (10, 20), an identification code identifying the dialog device (50, 60), and/or an identifier, wherein the identifier signals whether or not a system statement has been generated for a terminal device, or what quality the generated system statement has, and **in that**
the second device (49) of the first switching device (40) has a detector device (43) for acquiring the identifier and identification code of a system message, a memory (46) for storing a priority list concerning the associated dialog devices, and a decision device (42) which uses the stored priority list and the output signal from the detector device (43) to select the system statement of a specific dialog device (50, 60) for relaying to the terminal device (10, 20).

3. Dialog system according to claim 1 or 2,
**characterized in that**
the second device (49) of the first switching device (40) has a memory (45) for storing the received system messages.

4. Dialog system according to any one of claims 1 through 3,
**characterized in that**
the terminal device (10, 20) has associated therewith a user interface (12, 22) for providing a first communication protocol and/or data format for exchanging data with the first switching device (40), **in that**
the dialog devices (50, 60) each have an interface (52, 62) for providing a second communication protocol and/or data format for exchanging data with the first switching device (40), and **in that**
the first device of the first switching device has a conversion device (44) for converting the first communication protocol and/or data format into the second communication protocol and/or data format and vice versa.

5. Dialog system according to any one of claims 1 through 4,
**characterized in that**
the first switching device (40) has a timer for monitoring the reception of a system message within a predetermined time span.

6. Dialog system according to any one of claims 2 through 5,
**characterized in that**
the first switching device (40) has a confirmation device for transmitting a confirmation message to the dialog device (50, 60) whose system statement has been relayed to the terminal device (10, 20).

7. Dialog system according to claim 6,
**characterized in that**
at least some of the dialog devices (50, 60) have a device (54, 64) for counting and analyzing the received confirmation messages.

8. Dialog system according to claim 7,
**characterized in that**
the dialog devices (50, 60) are able to generate a predefined system message in response to the counting and analysis device (54, 64), and **in that**,
in response to a predefined system message, the detector device (43) in the first switching device (40) causes the decision device (42) to transmit the corresponding system statement to the terminal device (10, 20).

9. Dialog system according to any one of claims 2 through 8,
**characterized in that**
the priority list (46) stored in the first switching device (40) can be modified.

10. Dialog system according to any one of claims 1 through 9,
**characterized in that**
a sub-switching device (70; 80) is associated with each dialog device (50; 60), and **in that**
multiple sub-dialog devices (90-92; 93-95) are associated with each sub-switching device (70; 80).

11. Dialog system according to claim 10,
**characterized in that**
each sub-switching device (70; 80) has the following features:
a device (72, 82) for transmitting a user statement relayed by the applicable associated dialog device (50; 60) to at least some of the associated sub-dialog devices (90-92; 93-95); and
a device (74; 84) that selects a system message and transmits it to the first switching device (40) in response to the system messages received from the sub-dialog devices (90-92; 93-95).

12. Dialog system according to any one of claims 1 through 11,
**characterized in that**
goal-directed and conversational dialog devices can be used.

13. Dialog system according to any one of claims 1 through 12,
**characterized in that**
a second switching device (100) is connected to the terminal device (10, 20) and multiple first switching devices (40', 40", 40"'), wherein the second switching device (100) has:
a first device (102) for relaying a user statement coming from the terminal device (10, 20) to at least some of the first switching devices (40), and
a second device (104) which, in response to the system messages coming from the first switching devices (40', 40", 40"'), selects a system message and transmits the system statement contained therein to the terminal device (10, 20); and wherein
the first switching devices (40', 40", 40"') are designed to relay a selected system message to the second switching device (100).

## Revendications

1. Système de dialogue pour une interaction homme-machine moyennant des dispositifs de dialogue coopérants, comprenant
au moins un terminal (10, 20) sur lequel un utilisateur peut entrer un énoncé de l'utilisateur ;
au moins un premier dispositif de commutation (40 ; 40', 40", 40"') pouvant être relié au terminal (10, 20) de manière à permettre à l'utilisateur de se connecter au dispositif de commutation, plusieurs dispositifs de dialogue (50, 60) différents associés au premier dispositif de commutation (40) aptes à générer des messages du système en réponse à un énoncé de l'utilisateur,
le premier dispositif de commutation (40) comportant un premier dispositif (44) de réacheminement d'un énoncé de l'utilisateur venant d'un terminal vers au moins quelques-uns des dispositifs de dialogue (50, 60) associés, **caractérisé en ce que**
le premier dispositif de commutation (40) comporte un deuxième dispositif (49) qui, en réponse aux messages du système reçus des dispositifs de dialogue (50, 60), sélectionne un message du système et transmet l'énoncé du système qu'il contient au terminal (10, 20) de manière que le dispositif de commutation (40) fournisse un énoncé du système sélectionné parmi les énoncés du système de différents dispositifs de dialogue à l'utilisateur, en fonction de son énoncé de l'utilisateur.

2. Système de dialogue selon la revendication 1, **caractérisé en ce que** le message du système généré par un dispositif de dialogue (50, 60) en réponse à un énoncé de l'utilisateur contient un énoncé du système destiné au terminal (10, 20), un code d'identification identifiant le dispositif de dialogue (50, 60) et/ou un identifiant, l'identifiant signalant si un énoncé du système a été généré ou non pour un terminal ou spécifiant la qualité que possède l'énoncé du système, et **en ce que** le deuxième terminal (49) du premier dispositif de commutation (40) comporte un dispositif de détection (43) pour la détection de l'identifiant et du code d'identification d'un message du système, une mémoire (46) pour le stockage d'une liste de priorités sur les dispositifs de dialogue associés et un dispositif de décision (42) qui sélectionne, en utilisant la liste de priorités stockée et du signal de sortie du dispositif de détection (43), l'énoncé du système d'un dispositif de dialogue (50, 60) pour le réacheminer vers le terminal (10, 20).

3. Système de dialogue selon la revendication 1 ou 2, **caractérisé en ce que** le deuxième terminal (49) du premier dispositif de commutation (40) contient une mémoire (45) pour le stockage des messages du système reçus.

4. Système de dialogue selon l'une des revendications 1 à 3, **caractérisé en ce qu'**une interface utilisateur (12, 22) pour la fourniture d'un premier protocole de communication et/ou format de données pour l'échange de données avec le premier dispositif de commutation (40) est associée au terminal (10, 20), **en ce que** les dispositifs de dialogue (50, 60) contiennent chacun une interface (52, 62) pour la fourniture d'un deuxième protocole de communication et/ou format de données pour l'échange de données avec le premier dispositif de commutation (40), et **en ce que** le premier dispositif du dispositif de commutation comporte un dispositif de conversion (44) pour la conversion du premier protocole de communication et/ou format de données en le deuxième protocole de communication et/ou format de données et vice-versa.

5. Système de dialogue selon l'une des revendications 1 à 4, **caractérisé en ce que** le premier dispositif de commutation (40) comporte une horloge pour la surveillance de la réception d'un message du système dans un laps de temps prédéterminé.

6. Système de dialogue selon l'une des revendications 2 à 5, **caractérisé en ce que** le premier dispositif de commutation (40) comporte un dispositif de confirmation pour la transmission d'un message de confirmation au dispositif de dialogue (50, 60) dont l'énoncé du système a été réacheminé vers le terminal (10, 20).

7. Système de dialogue selon la revendication 6, **caractérisé en ce qu'**au moins quelques-uns des dispositifs de dialogue (50, 60) comportent un dispositif (54, 64) de comptage et d'analyse des messages de confirmation reçus.

8. Système de dialogue selon la revendication 7, **caractérisé en ce que** les dispositifs de dialogue (50, 60) peuvent générer un message du système prédéterminé en réponse au dispositif de comptage et d'analyse (54, 64) et **en ce qu'**en réponse à un message du système prédéterminé,
le dispositif de détection (43) dans le premier dispositif de commutation (40) amène le dispositif de décision (42) à transmettre l'énoncé du système associé au terminal (10, 20).

9. Système de dialogue selon l'une des revendications 2 à 8, **caractérisé en ce que** la liste de priorités (46) stockée dans le premier dispositif de commutation (40) peut être modifiée.

10. Système de dialogue selon l'une des revendications 1 à 9, **caractérisé en ce qu'**un dispositif de commutation subordonné (70 ; 80) est associé à chaque dispositif de dialogue (50 ; 60) et **en ce que** plusieurs dispositifs de dialogue subordonnés (90 - 92 ; 93 - 95) sont associés à chaque dispositif de commutation subordonné (70 ; 80).

11. Système de dialogue selon la revendication 10, **caractérisé en ce que** chaque dispositif de commutation subordonné (70 ; 80) présente les caractéristiques suivantes :
un dispositif (72, 82) de transmission d'un énoncé de l'utilisateur réacheminée par le dispositif de dialogue (50 ; 60) respectivement associé à au moins quelques-uns des dispositifs de dialogue subordonnés (90 - 92 ; 93 - 95) associés, et
un dispositif (74 ; 84) qui, en réponse aux messages du système reçus des dispositifs de dialogue subordonnés (90 - 92 ; 93 - 95), sélectionne un message du système et le transmet au premier dispositif de commutation (40).

12. Système de dialogue selon l'une des revendications 1 à 11, **caractérisé en ce qu'**il est possible d'utiliser des dispositifs de dialogue ciblés et conversationnels.

13. Système de dialogue selon l'une des revendications 1 à 12, **caractérisé en ce qu'**un deuxième dispositif de commutation (100) est relié au terminal (10, 20) et à plusieurs premiers dispositifs de commutation (40', 40", 40"'), le deuxième dispositif de commutation (100) comportant :
un premier dispositif (102) de réacheminement d'un énoncé de l'utilisateur venant du terminal (10, 20) vers au moins quelques-uns des premiers dispositifs de commutations (40), et
un deuxième dispositif (104) qui, en réponse aux messages du système venant des premiers dispositifs de commutations (40', 40", 40"'), sélectionne un message du système et transmet l'énoncé du système qu'il contient au terminal (10, 20), et
les premiers dispositifs de commutations (40', 40", 40"') étant conçus pour le réacheminement d'un message du système sélectionné vers le deuxième dispositif de commutation (100).
